# EUROPÄISCHE PATENTSCHRIFT

(11) **EP 3 513 384 B1**
(45) Veröffentlichungstag und Bekanntmachung des Hinweises auf die Patenterteilung: **24.04.2024**
(21) Anmeldenummer: 17776932.0
(22) Anmeldetag: 29.08.2017
(51) Int. Cl.: G07C 5/00, G08G 1/00, H04J 3/06

(54) **VERFAHREN ZUM ERMITTELN EINER ZEIT**
METHOD FOR DETERMINING A PERIOD
PROCÉDÉ POUR DÉTERMINER UN INTERVALLE DE TEMPS

(30) Priorität: 16.09.2016 DE 102016217811
(43) Veröffentlichungstag der Anmeldung: 24.07.2019
(73) Patentinhaber: Continental Automotive Technologies GmbH, 30175 Hannover (DE)
(72) Erfinder: ANTONI, Henrik, 63579 Freigericht (DE); JUNGK, Bernhard, 89075 Ulm (DE)
(74) Vertreter: Continental Corporation
(86) Internationale Anmeldenummer: PCT/DE2017/200085
(87) Internationale Veröffentlichungsnummer: WO 2018/050179

(56) Entgegenhaltungen:
- WO-A1-2014/027072
- DE-A1-102011 007 132
- DE-A1-102013 221 321
- DE-A1-102014 208 266

## Beschreibung

Die Erfindung betrifft ein Verfahren zum Ermitteln einer Zeit in einem Fahrzeug.

Bei Fahrzeugen befindet sich derzeit die Fahrzeug-zu-X-Kommunikation in einer Phase der Standardisierung und Markteinführung. Damit ist verbunden, dass in Zukunft Fahrzeuge wesentlich häufiger als heute Daten miteinander austauschen. Als Basis für Funktionen in Fahrzeugen und deren Kommunikation untereinander ist es von besonderer Wichtigkeit, dass eine verlässliche Uhrzeit vorliegt, damit Algorithmen Entscheidungen auf Basis von aktuellen Informationen treffen.

Dabei ist grundsätzlich davon auszugehen, dass typischerweise eine permanente Stromversorgung nicht zur Verfügung gestellt werden kann und damit eine Echtzeituhr während einer Zeit ohne Stromversorgung nicht betrieben werden kann. Beispielsweise können solche Stromausfälle bei Werkstattaufenthalten oder beim Ausschalten der Zündung auftreten.

Im Falle eines Fahrzeug-zu-X-Systems werden beispielsweise Positions- und Zustandsinformationen anderer Fahrzeuge empfangen, ausgewertet und - in der ersten Generation - Fahrerwarnungen erzeugt. In Folgegenerationen werden auch Eingriffe in die Fahrdynamik auf Basis von empfangenen Nachrichten vorgenommen. Neben diesen Anwendungen ist es auch hilfreich, die Uhrzeit zur Gültigkeitsüberprüfung von verfügbaren Ephemeridendaten von verwendeten Navigationssystemen (GNSS = Global Navigation Satellite System) zu kennen, um deren Verwendbarkeit zu prüfen.

Aus Satellitennavigationssignalen kann grundsätzlich eine aktuelle Uhrzeit zur Plausibilisierung von Informationen und zur Auswahl von aktuell gültigen Zertifikaten ermittelt werden. Diese Signale sind jedoch nicht permanent verfügbar und es besteht auch die Gefahr, dass die empfangenen Daten durch Mehrfachreflexionen verfälscht oder durch einen bösartigen Angreifer gezielt manipuliert werden.

Das Dokument DE 10 2014 208 266 A1 offenbart ein Verfahren zum Erzeugen eines Zeitstempels in einem an einem Fahrzeug-Ad-hoc-Netzwerk teilnehmenden Fahrzeug, das mit dem Zeitstempel einem in einer Nachricht versendeten Ereignis eine Uhrzeit zuordnet, die durch Fortschreiben einer aus einem Satellitennavigationssignal ableitbaren globalen Zeitbasis erzeugt wird.

Das Dokument DE 10 2013 221 321 A1 offenbart ein Verfahren zum Synchronisieren von Verkehrsteilnehmern auf eine gemeinsame Zeitbasis, bei dem Daten periodisch oder Ereignis-basiert zwischen einer Vielzahl sich bewegender Verkehrsteilnehmer in Nachrichten über ein gemeinsames Übertragungsmedium übertragen werden.

Es ist deshalb eine Aufgabe der Erfindung, eine Zeit in einem Fahrzeug alternativ, beispielsweise sicherer, präziser und/oder kostengünstiger, zur Verfügung zu stellen.

Dies wird erfindungsgemäß durch ein Verfahren nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Verfahren zum Ermitteln einer Zeit in einem Fahrzeug, welches die Schritte des Anspruchs 1 aufweist.

Mittels des erfindungsgemäßen Verfahrens kann aus einer Mehrzahl von Zeitquellen, eine Zeit ermittelt werden, wobei auch ein Gesamtvertrauensmaß zur Verfügung gestellt wird, welches die Zuverlässigkeit der ermittelten Zeit anzeigt. Bei einer Verwendung einer Mehrzahl von Zeitinformationen, also beispielsweise zwei, drei, vier oder mehr Zeitinformationen von jeweils unterschiedlichen Zeitquellen, ist es auf diese Weise möglich, eventuelle Fehler einzelner Zeitquellen zu eliminieren und eine insgesamt vertrauenswürdige Zeitbasis zu erhalten.

Gemäß der Erfindung werden die Zeitinformationen von einer Kombination unterschiedlicher Zeitquellen empfangen, welche aus folgender Gruppe ausgewählt sind:
- Infrastruktureinrichtungen, insbesondere Roadside Units,
- andere Fahrzeuge,
- Sondereinsatzfahrzeuge,
- Backend-Systeme,
- Intelligente Transportsysteme (ITS),
- Funkuhren,
- Public-Key-Infrastruktur-Systeme,
- Satelliten,
- Mobilfunknetz.

Es sei verstanden, dass jede beliebige Kombination dieser erwähnten Zeitquellen in beliebiger Weise miteinander kombiniert werden können. Alle entsprechenden Kombinationen gelten als Bestandteil der Offenbarung dieser Anmeldung.

Infrastruktureinrichtungen wie Roadside Units sind sehr zuverlässig, stehen jedoch nur selten zur Verfügung. Andere Fahrzeuge sind zwar sehr häufig auf Straßen anzutreffen, sind jedoch eher anfällig für Fehler oder Manipulationen. Sondereinsatzfahrzeuge sind typischerweise zuverlässig, da es sich um Behördenfahrzeuge handelt, jedoch stehen auch diese nur sehr selten zur Verfügung.

Backend-Systeme und Intelligente Transportsysteme sind zwar grundsätzlich zuverlässig, jedoch nicht immer implementiert bzw. verfügbar.

Funkuhren sind sehr präzise und deren Signale sind auch weiträumig zu empfangen, jedoch sind sie anfällig für bewusste Manipulationen, da deren Signale schlecht oder nur schwach verschlüsselt sind. Satellitensignale sind nicht überall verfügbar, beispielsweise in Tunnels oder in Gebäuden, und sind überdies anfällig für Mehrfachreflexionen und andere Effekte.

Es kann auch eine Fahrzeug-interne Echtzeituhr als Zeitquelle verwendet werden. Fahrzeug-interne Echtzeituhren sind zwar eine zuverlässige interne Zeitquelle, sie können jedoch gegebenenfalls bei einem Stromausfall nicht dauerhaft betrieben werden. Es sei verstanden, dass eine Fahrzeug-interne Echtzeituhr typsicherweise als intern im Fahrzeug implementiert angesehen werden kann, was die Verwendbarkeit im Rahmen des hierein beschriebenen Verfahrens jedoch nicht beeinträchtigt. Sie kann genauso wie externe Zeitquellen verwendet werden und ein Zeitquellenvertrauensmaß aufweisen.

Beim Bestimmen der Zeit werden vorteilhaft die Zeitinformationen gewichtet. Damit können besonders vertrauenswürdige und/oder zuverlässige und/oder genaue Zeitquellen höher gewichtet werden als andere Zeitquellen.

Eine Zeitinformation kann dabei insbesondere umso höher gewichtet werden, je höher das jeweilige Zeitquellenvertrauensmaß der Zeitquelle ist, von welcher die Zeitinformation empfangen wurde.

Ein jeweiliges Zeitquellenvertrauensmaß ist anzeigend für eine Zuverlässigkeit der jeweiligen Zeitquelle. Alternativ, jedoch nicht durch die Ansprüche mit umfasst, kann ein jeweiliges Zeitquellenvertrauensmaß anzeigend sein für eine Genauigkeit der jeweiligen Zeitquelle. Das Zeitquellenvertrauensmaß kann also beispielsweise nur die Genauigkeit, nur die Zuverlässigkeit oder sowohl die Genauigkeit wie auch die Zuverlässigkeit anzeigen. Insbesondere im letzten Fall kann sowohl ein Gesamtmaß für Genauigkeit und Zuverlässigkeit gebildet werden, oder es können separate Werte für Genauigkeit und Zuverlässigkeit in dem jeweiligen Zeitquellenvertrauensmaß enthalten sein. Insbesondre in letzterem Fall können beispielsweise jeweilige Schwellenwerte zwei Komponenten haben, also eine Komponente für die Genauigkeit und eine Komponente für die Zuverlässigkeit, oder es können beispielsweise die Werte für Genauigkeit und für Zuverlässigkeit addiert oder sonst wie zusammengefasst werden und mit einem einzigen Schwellenwert verglichen werden.

Gemäß einer Weiterbildung wird ferner eine Abweichung zwischen den Zeitinformationen ermittelt. Das Gesamtvertrauensmaß kann dabei ferner basierend auf der Abweichung bestimmt werden. Bei einer besonders hohen Abweichung, welche auf unzuverlässige Zeitquellen hinweist, kann das Gesamtvertrauensmaß somit insbesondere abgesenkt werden, um eventuell Anwendungen warnen zu können, dass die ermittelte Zeit nicht zuverlässig ist.

Gemäß einer bevorzugten Ausführung wird eine Überprüfung ansprechend darauf aktiviert, dass die Abweichung einen vorgegebenen Schwellenwert überschreitet. Dadurch können eventuelle Fehler im System oder bei den Zeitquellen durch die Überprüfung gefunden und gegebenenfalls eliminiert oder berücksichtigt werden.

Insbesondere kann eine Zeitquelle aus einer Mehrzahl von Zeitquellen ganz oder teilweise ignoriert werden, wenn die von ihr gelieferte Zeitinformation in bestimmter Weise, beispielsweise mehr als einen vorgegebenen absoluten oder relativen Schwellenwert, von den Zeitinformationen anderer Zeitquellen abweicht. Die Zeitinformationen anderer Zeitquellen können hierzu beispielsweise gemittelt werden.

Es kann auch eine Anfrage an ein Backend nach der aktuellen Zeit gestellt werden, insbesondere wenn zwischen den von unterschiedlichen Zeitquellen gelieferten Zeitinformationen zu große Abweichungen bestehen, beispielsweise wenn sie sich um mehr als einen absoluten oder relativen Schwellenwert voneinander unterscheiden.

Gemäß einer bevorzugten Ausführung werden nach einem Ausfall eines das Verfahren implementierenden Systems Ausfallzeiten basierend auf unterschiedlichen Zeitquellen miteinander verglichen. Wenn eine Abweichung zwischen den Ausfallzeiten einen Schwellenwert übersteigt, wird eine Unzuverlässigkeit der Zeitbestimmung festgestellt. Damit kann vermieden werden, dass eine Initialisierung von Systemen mit unzuverlässigen oder ungenauen Zeiten erfolgt. Die Ausfallzeit kann dabei jeweils separat für jede Zeitquelle ermittelt werden, so dass ein Vergleich leicht möglich ist.

Gemäß der Erfindung wird ein kontinuierliches Zeitmaß von einem Oszillator vorangetrieben, wobei das Zeitmaß mittels der bestimmten Zeit aktualisiert wird. Ein solcher Oszillator kann dabei insbesondere ein Zeitmaß vorantreiben, welches beispielsweise als Zähler, Inkrementierer oder als Uhr ausgeführt ist. Dies ermöglicht eine kontrollierte Implementierung einer Echtzeituhr unter Berücksichtigung der hier diskutierten Randbedingungen.

Gemäß der Erfindung ist vorgesehen, dass das Zeitmaß nur dann aktualisiert wird, wenn das Gesamtvertrauensmaß der Zeit einen vorbestimmten Schwellenwert übersteigt. Die Verwendung von nicht vertrauenswürdigen Zeiten zur Aktualisierung des Zeitmaßes kann damit vorteilhaft verhindert werden.

Das Zeitmaß kann insbesondere in vorgegebenen Zeitabständen und/oder nach vorgegebenen Ereignissen, insbesondere einem Stromausfall, aktualisiert werden. Dies erlaubt ein Aktualisieren des Zeitmaßes mittels des hierin beschriebenen Verfahrens zu sinnvollen Zeitpunkten.

Bevorzugt ist das Zeitmaß derart implementiert, dass es ausschließlich zu späteren Zeiten hin geändert werden kann. Damit wird vermieden, dass ein möglicher Angreifer durch Nachrichten, welche eine frühere Zeit vorgaukeln, das Zeitmaß auf einen Wert setzt, welcher tatsächlich bereits vergangen ist. Damit kann beispielsweise verhindert werden, dass durch einen solchen Angriff das Fahrzeug dazu gebracht wird, Fahrzeug-zu-X-Nachrichten für noch gültig zu erachten, welche in Wirklichkeit gar nicht mehr gültig sind.

Gemäß einer bevorzugten Ausführung werden bei einem Ausscheiden eines das Zeitmaß verwaltenden Systems das Zeitmaß und/oder eine Anzahl von Zeiten gespeichert. Damit können beispielsweise die weiter oben erwähnten Ausfallzeiten berechnet werden. Außerdem kann ein Startwert vorgegeben werden, welchen bei einem Einschalten des Systems die Zeit nicht unterschreiten kann.

Gemäß einer bevorzugten Ausführung wird das Zeitmaß erst nach einer Aktualisierung oder nach einer vorgegebenen Mindestanzahl von Aktualisierungen für vorgegebene Aufgaben verwendet. Damit kann sichergestellt werden, dass das Zeitmaß erst dann für sicherheitskritische Anwendungen verwendet wird, wenn es so aktualisiert wurde, dass es zuverlässig ist.

In einem Fahrzeug kann beispielsweise eine Uhr implementiert sein, welche auf Satellitennavigationssignalen basiert. Aufgrund der reduzierten Verfügbarkeit, aber vor allem auch wegen der Manipulierbarkeit, ist diese Uhrzeit nicht ausreichend für eine Fahrerwarnung oder gar einen Eingriff in die Fahrdynamik geeignet. Wegen Verfügbarkeitslücken einer Stromversorgung kann auch nicht auf interne Uhren, wie sie in Komponenten zur Satellitennavigation oder einem Hardware-Security-Modul teilweise bereits implementiert sind, zurückgegriffen werden.

Wie bereits weiter oben beschrieben und nunmehr nochmals ausgeführt, können verschiedene Zeitquellen im Rahmen der Erfindung bzw. zur Referenzierung herangezogen werden.

Von infrastrukturseitigen Roadside Units kann eine hohe Vertrauenswürdigkeit angenommen werden. Allerdings stehen diese Einheiten räumlich nur punktuell zur Verfügung.

Sondereinsatzfahrzeuge können ebenfalls als vertrauenswürdige Zeitquelle angesehen werden, stehen aber ebenfalls nur in deren Einsatzfeld räumlich punktuell zur Verfügung.

Andere Fahrzeug-zu-X-Teilnehmer stehen nach einer Einführungsphase flächendeckend zur Verfügung, bieten aber einzeln keine hohe Vertrauenswürdigkeit. Die Vertrauenswürdigkeit kann durch mehrere Teilnehmer erhöht werden.

Backend-basierte ITS-Systeme (Intelligente Transportsysteme) können auch eine Uhrzeit bereitstellen, wobei deren Vertrauenswürdigkeit auch nur begrenzt ist. Die Vertrauenswürdigkeit kann durch sichere Kommunikation erhöht werden.

Funkuhrsignale können typischerweise mit einer bestehenden Antenne empfangen werden. Diese Uhrzeit gilt als besonders genau, allerdings ist auch bei diesen Signalen keine Security-Absicherung gegeben.

Eine Kommunikation mit einer Public Key Infrastructure (PKI) kann neben der Anforderung von Pseudonym-Zertifikaten ebenfalls genutzt werden, um eine Uhrzeit sicher abzufragen. Hierzu ist allerdings eine Datenkommunikation im Fahrbetrieb erforderlich. Eine Fahrzeug-interne Echtzeituhr (Real Time Clock, RTC) würde ein hohes Maß an Vertrauenswürdigkeit bieten, es ist allerdings nicht davon auszugehen, dass Fahrzeuge zeitnah und mit hoher Implementierungsrate entsprechend zur Verfügung stehen. Somit ist es typischerweise nicht möglich, aus einer Zeitquelle die genaue und sichere Zeit zu generieren.

Um trotzdem eine ausreichend sichere und ausreichend genaue Uhrzeit zu realisieren, wird gemäß der Erfindung eine Kombination der verfügbaren Quellen gewählt. Diese Quellen erhalten bevorzugt einen Vertrauenswürdigkeitsindex bzw. ein Zeitquellenvertrauensmaß, um die Verlässlichkeit der Information zu repräsentieren, und einen Genauigkeitsindex, der die Genauigkeit der Zeit wiederspiegeln kann. Die Summe der kombinierten Indizes gibt nun Auskunft über die Zuverlässigkeit der Information und es kann eine - auf mathematischer Grundlage gebildete - Entscheidung gefällt werden.

Eine Überprüfung von Genauigkeit oder Abweichungen kann insbesondere im Fahrzeug erfolgen, kann jedoch beispielsweise auch in einem Backend erfolgen. Ein Backend kann insbesondere eine Server- oder andere Infrastruktur sein, auf welche über Funkkommunikation, beispielsweise Fahrzeug-zu-X-Kommunikation oder Mobilfunk, zugegriffen werden kann.

Neben den Zuverlässigkeitsindizes kann auch noch eine zeitliche Abweichung der Quellen zueinander berücksichtigt werden. Ist die Information einer Quelle außerhalb der erwarteten Toleranz zur internen Referenz, so wird vorteilhaft eine Prüfung angestoßen und alle verfügbaren Quellen werden abgefragt. Es können auch zusätzliche Anfragen, beispielsweise an die Public-Key-Infrastruktur, gestellt werden.

Neben diesen Vergleichsmöglichkeiten kann die Uhrzeit auch permanent geprüft werden. Hierbei kann ein Zeitstrahl angenommen werden, der durch einen internen Oszillator vorangetrieben werden kann. Erst wenn eine ausreichende Datenbasis vorliegt, wird bevorzugt eine verlässliche Uhrzeit kommuniziert. Jede weitere Uhrzeit-behaftete Information wird mit dem Zeitstrahl verglichen und die Abweichung wird berechnet. Sind ausreichend viele und/oder genaue Zeitinformationen verfügbar, wird der Zeitstrahl vorteilhaft nachgeführt. Beim Ausschalten des Systems kann der letzte Wert des Zeitstrahls gespeichert werden; eine Speicherung der letzten Referenzzeiten kann ebenfalls hilfreich sein, um die "Schlafzeiten" mehrerer Quellen miteinander zu vergleichen. Wird das System anschließend beispielsweise geweckt, werden zunächst die verschiedenen Schlafzeiten ermittelt und verglichen. Auch hier kann wiederum eine auf mathematischen Regeln basierte Entscheidung über das Vertrauen gefällt werden.

Ein Vergleich der Abweichungen der Informationen kann aber auch zur Abwertung der summierten Verlässlichkeit führen. Fällt die summierte Verlässlichkeit unter eine bestimmte vordefinierte Schranke, kann beispielsweise signalisiert werden, dass die Zeitquelle nicht mehr verlässlich ist und eine entsprechende Ersatzmaßnahme eingeleitet werden muss.

Die Offenbarung betrifft des Weiteren ein System bzw. ein Steuerungsmodul, welches dazu konfiguriert ist, ein erfindungsgemäßes Verfahren auszuführen. Des Weiteren betrifft die Offenbarung ein nichtflüchtiges computerlesbares Speichermedium, auf dem Programmcode gespeichert ist, bei dessen Ausführung ein Computer ein erfindungsgemäßes Verfahren ausführt. Bezüglich des erfindungsgemäßen Verfahrens kann dabei jeweils auf alle beschriebenen Ausführungen und Varianten zurückgegriffen werden.

Weitere Merkmale und Vorteile wird der Fachmann dem nachfolgend mit Bezug auf die beigefügte Zeichnung beschriebenen Ausführungsbeispiel entnehmen. Dabei zeigt:

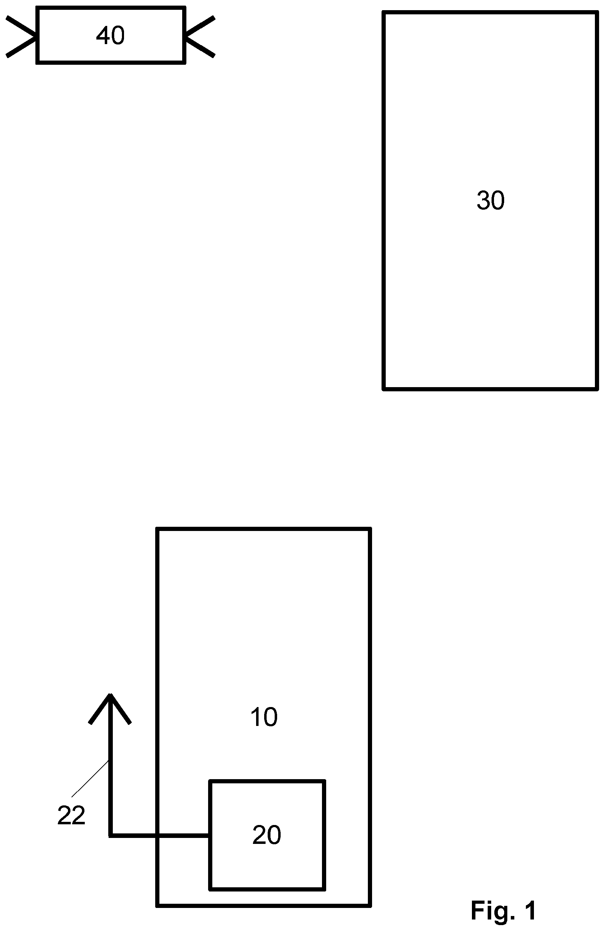

Fig. 1: ein Fahrzeug, welches zur Ausführung eines erfindungsgemäßen Verfahrens konfiguriert ist.

Fig. 1 zeigt ein Fahrzeug 10, welches hier lediglich schematisch dargestellt ist. Das Fahrzeug 10 weist ein Steuerungsmodul 20 auf, welches zur Durchführung einer möglichen Ausführung eines erfindungsgemäßen Verfahrens konfiguriert ist. Auch das Steuerungsmodul 20 ist hier lediglich schematisch dargestellt. Das Fahrzeug 10 weist eine Antenne 22 auf, mit welcher diverse Signale empfangen werden können. Die Antenne 22 ist wie gezeigt mit dem Steuerungsmodul 20 verbunden.

In der vorliegenden Ausführung werden über die Antenne 22 insbesondere Fahrzeug-zu-X-Nachrichten empfangen, welche beispielsweise von einem auch lediglich schematisch und beispielhaft dargestellten weiteren Fahrzeug 30 stammen können. Des Weiteren werden Satellitennavigationssignale empfangen, welche beispielsweise von einem lediglich schematisch und beispielhaft dargestellten Satelliten 40 stammen können.

Sowohl Fahrzeug-zu-X-Nachrichten wie auch Satellitennavigationssignale enthalten jeweilige Zeitinformationen. Das Steuerungsmodul 20 verwendet diese Zeitinformationen und ermittelt damit ein kombiniertes Zeitmaß, welches in Form einer gewichteten Mittelwertbildung erfolgt. Die Zeitquellen, hier also das weitere Fahrzeug 30 und der Satellit 40, werden dabei hinsichtlich ihrer Zuverlässigkeit und Genauigkeit gewichtet. Damit kann insgesamt ein zuverlässigeres Zeitmaß erhalten werden als bei Verwendung nur einer Zeitquelle.

Des Weiteren wird laufend eine Abweichung zwischen den von den beiden Zeitquellen gelieferten Zeiten bestimmt. Sollte diese einen bestimmten Wert überschreiten, so wird eine Fehlersuchprozedur aktiviert, welche nach Fehlern im System oder bei den Zeitquellen sucht. Bei entsprechender Abweichung kann beispielsweise die Verwendung der ermittelten Zeit für kritische Anwendungen temporär ausgesetzt werden.

In dem Steuerungsmodul 20 ist des Weiteren ein kontinuierliches Zeitmaß implementiert, welches von einem Oszillator vorangetrieben wird. Das Zeitmaß ist derart implementiert, dass es nur zu späteren Zeiten hin vorangetrieben werden kann. Sollte es zu einem Stromausfall kommen, so bleibt dieses Zeitmaß bei seinem letzten Wert vor dem Stromausfall stehen. Nach dem Stromausfall wird es weiter von dem Oszillator vorangetrieben. Sofern eine ausreichend zuverlässige Zeit bestimmt wurde, wie dies eben beschrieben wurde, wird das Zeitmaß aktualisiert, so dass damit die Zeit des Stromausfalls insofern überbrückt ist, als nunmehr wiederum ein aktuelles Zeitmaß zur Verfügung steht. Durch die beschriebene Implementierung wird ein Rückspulen des Zeitmaßes verhindert, so dass Angreifer nicht über kompromittierte Nachrichten dem Fahrzeug 10 vorgaukeln können, die Zeit sei früher als sie tatsächlich ist. Damit werden Angriffe dergestalt erschwert, dass Fahrzeug-zu-X-Nachrichten aufgezeichnet werden und unter Vorspiegelung einer falschen Zeit zu späteren Zeitpunkten ausgesendet und als gültige Nachricht erkannt werden.

Allgemein sei darauf hingewiesen, dass unter Fahrzeug-zu-X-Kommunikation insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

## Patentansprüche

1. Verfahren zum Ermitteln einer Zeit in einem Fahrzeug (10), welches folgende Schritte aufweist:
- Vorantreiben eines in einem Steuerungsmodul des Fahrzeugs implementierten kontinuierlichen Zeitmaßes mittels eines Oszillators;
- Empfangen einer Mehrzahl von Zeitinformationen von jeweils einer zum Fahrzeug (10) externen Zeitquelle, wobei jeder Zeitquelle ein jeweiliges Zeitquellenvertrauensmaß zugeordnet ist, wobei ein jeweiliges Zeitquellenvertrauensmaß anzeigend ist für eine Zuverlässigkeit der jeweiligen Zeitquelle;
- Bestimmen der Zeit basierend auf den Zeitinformationen, und
- Bestimmen eines der Zeit zugeordneten Gesamtvertrauensmaßes basierend auf den Zeitquellenvertrauensmaßen,
- wobei das Zeitmaß mittels der bestimmten Zeit nur dann aktualisiert wird, wenn das Gesamtvertrauensmaß der Zeit einen vorbestimmten Schwellenwert übersteigt;
- wobei die Zeitinformationen von einer Kombination unterschiedlicher empfangen werden, welche aus folgender Gruppe ausgewählt sind:
- Infrastruktureinrichtungen, insbesondere Road Side Units,
- andere Fahrzeuge (30),
- Sondereinsatzfahrzeuge,
- Backend-Systeme,
- Intelligente Transportsysteme (ITS),
- Funkuhren,
- Public-Key-Infrastruktur-Systeme,
- Satelliten,
- Mobilfunknetz.

2. Verfahren nach einem der vorhergehenden Ansprüche,
- wobei beim Bestimmen der Zeit die Zeitinformationen gewichtet werden.

3. Verfahren nach Anspruch 2,
- wobei eine Zeitinformation umso höher gewichtet wird, je höher das jeweilige Zeitquellenvertrauensmaß der Zeitquelle ist, von welcher die Zeitinformation empfangen wurde.

4. Verfahren nach einem der vorhergehenden Ansprüche,
- wobei ferner eine Abweichung zwischen den Zeitinformationen ermittelt wird.

5. Verfahren nach Anspruch 4,
- wobei das Gesamtvertrauensmaß ferner basierend auf der Abweichung bestimmt wird.

6. Verfahren nach einem der Ansprüche 4 oder 5,
- wobei eine Überprüfung ansprechend darauf aktiviert wird, dass die Abweichung einen vorgegebenen Schwellenwert überschreitet.

7. Verfahren nach einem der vorhergehenden Ansprüche,
- wobei nach einem Ausfall eines das Verfahren implementierenden Systems Ausfallzeiten basierend auf unterschiedlichen Zeitquellen miteinander verglichen werden,
- wobei wenn eine Abweichung zwischen den Ausfallzeiten einen Schwellenwert übersteigt eine Unzuverlässigkeit der Zeitbestimmung festgestellt wird.

8. Verfahren nach einem der vorhergehenden Ansprüche,
- wobei das Zeitmaß in vorgegebenen Zeitabständen und/oder nach vorgegebenen Ereignissen, insbesondere einem Stromausfall, aktualisiert wird.

9. Verfahren nach einem der Ansprüche 1 bis 8,
- wobei das Zeitmaß derart implementiert ist, dass es ausschließlich zu späteren Zeiten hin geändert werden kann.

10. Verfahren nach einem der Ansprüche 1 bis 9,
- wobei bei einem Ausschalten eines das Zeitmaß verwaltenden Systems das Zeitmaß und/oder eine Anzahl von Zeiten gespeichert werden.

11. Verfahren nach einem der Ansprüche 1 bis 10,
- wobei das Zeitmaß erst nach einer Aktualisierung oder nach einer vorgegebenen Mindestanzahl von Aktualisierungen für vorgegebene Aufgaben verwendet wird.

## Claims

1. Method for determining a time in a vehicle (10), said method having the following steps:
- advancing a continuous measure of time implemented in a control module of the vehicle by means of an oscillator;
- receiving a plurality of items of time information from in each case a time source outside the vehicle (10), wherein a respective time source degree of confidence is assigned to each time source, wherein a respective time source degree of confidence is indicative of a reliability of the respective time source;
- determining the time on the basis of the time information, and
- determining an overall degree of confidence assigned to the time on the basis of the time source degrees of confidence,
- wherein the measure of time is updated by means of the determined time only when the overall degree of confidence of the time exceeds a predetermined threshold value;
- wherein the time information is received from a combination of different devices selected from the following group:
- infrastructure devices, in particular roadside units,
- other vehicles (30),
- special response vehicles,
- back-end systems,
- intelligent transport systems (ITS),
- radio clocks,
- public key infrastructure systems, satellites,
- a mobile radio network.

2. Method according to any of the preceding claims,
- wherein the time information is weighted when determining the time.

3. Method according to Claim 2,
- wherein an item of time information is given a higher weighting, the higher the respective time source degree of confidence of the time source, from which the time information was received.

4. Method according to any of the preceding claims,
- wherein a discrepancy between the items of time information is also determined.

5. Method according to Claim 4,
- wherein the overall degree of confidence is also determined on the basis of the discrepancy.

6. Method according to either of claims 4 and 5,
- wherein a check is activated in response to the discrepancy exceeding a predefined threshold value.

7. Method according to any of the preceding claims,
- wherein, following a failure of a system implementing the method, failure times are compared with one another on the basis of different time sources,
- wherein, if a discrepancy between the failure times exceeds a threshold value, unreliability of the time determination is established.

8. Method according to any of the preceding claims,
- wherein the measure of time is updated at predefined intervals of time and/or after predefined events, in particular a power failure.

9. Method according to one of Claims 1 to 8,
- wherein the measure of time is implemented such that it can only be changed to later times.

10. Method according to one of Claims 1 to 9,
- wherein, when a system managing the measure of time is switched off, the measure of time and/or a number of times is/are stored.

11. Method according to one of Claims 1 to 10,
- wherein the measure of time is used for predefined tasks only after an update or after a predefined minimum number of updates.

## Revendications

1. Procédé pour déterminer un intervalle de temps dans un véhicule (10), comprenant les étapes suivantes :
- déclenchement à l'avance d'une mesure de temps continue mise en oeuvre dans un module de commande du véhicule au moyen d'un oscillateur ;
- réception d'une pluralité d'informations temporelles en provenance d'une source temporelle respective externe au véhicule (10), dans lequel chaque source temporelle est associée à une mesure de confiance de source temporelle respective, une mesure de confiance de source temporelle respective étant représentative d'une fiabilité de la source temporelle respective ;
- détermination du temps sur la base des informations temporelles, et
- détermination d'une mesure de confiance globale associée au temps sur la base des mesures de confiance de source temporelle,
- dans lequel la mesure de temps n'est actualisée au moyen du temps déterminé que si la mesure de confiance globale du temps dépasse une valeur seuil prédéterminée ;
- dans lequel les informations temporelles sont reçues en provenance d'une combinaison de différents éléments choisis dans le groupe suivant :
- des équipements d'infrastructure, en particulier des Road Side Units,
- d'autres véhicules (30),
- des véhicules d'intervention spéciale,
- des systèmes de gestion,
- des systèmes de transport intelligents (ITS),
- des horloges radio,
- des systèmes d'infrastructure à clé publique, des satellites,
- des réseaux de téléphonie mobile.

2. Procédé selon l'une des revendications précédentes,
- dans lequel, lors de la détermination du temps, les informations temporelles sont pondérées.

3. Procédé selon la revendication 2,
- dans lequel une information temporelle est pondérée d'autant plus fortement que la mesure de confiance respective de la source temporelle en provenance de laquelle l'information temporelle a été reçue est élevée.

4. Procédé selon l'une quelconque des revendications précédentes,
- dans lequel un écart entre les informations temporelles est en outre déterm iné.

5. Procédé selon la revendication 4,
- dans lequel la mesure de confiance globale est en outre déterminée sur la base de l'écart.

6. Procédé selon l'une des revendications 4 ou 5,
- dans lequel une vérification est activée en réponse au fait que l'écart dépasse une valeur seuil prédéfinie.

7. Procédé selon l'une des revendications précédentes,
- dans lequel, après une panne d'un système mettant en oeuvre le procédé, des temps de panne basés sur différentes sources temporelles sont comparés les uns aux autres,
- dans lequel, si un écart entre les temps de défaillance dépasse une valeur seuil, un manque de fiabilité de la détermination de temps est détecté.

8. Procédé selon l'une des revendications précédentes,
- dans lequel la mesure de temps est actualisée à des intervalles prédéfinis et/ou après des événements prédéfinis, notamment une panne de courant.

9. Procédé selon l'une des revendications 1 à 8,
- dans lequel la mesure de temps est mise en oeuvre de telle sorte qu'elle puisse être modifiée exclusivement à des moments ultérieurs.

10. Procédé selon l'une des revendications 1 à 9,
- dans lequel, lors de la désactivation d'un système gérant la mesure de temps, la mesure de temps et/ou un certain nombre de temps sont mémorisés.

11. Procédé selon l'une quelconque des revendications 1 à 10,
- dans lequel la mesure de temps n'est utilisée qu'après une actualisation ou après un nombre minimal prédéfini d'actualisations pour des tâches prédéfinies.
